# EUROPEAN PATENT SPECIFICATION

(11) **EP 3 099 036 B1**
(45) Date of publication and mention of the grant of the patent: **20.03.2019**
(21) Application number: 16171823.4
(22) Date of filing: 27.05.2016
(51) Int. Cl.: H04L 29/06, H04M 1/725, H04M 3/428

(54) **METHOD FOR REPRODUCING CALL HOLD TONE AND ELECTRONIC DEVICE THEREFOR**
VERFAHREN ZUR WIEDERGABE DES ANRUFHALTETONS UND ELEKTRONISCHE VORRICHTUNG DAFÜR
PROCÉDÉ DE REPRODUCTION DE MUSIQUE D'ATTENTE D'APPEL ET DISPOSITIF ÉLECTRONIQUE CORRESPONDANT

(30) Priority: 29.05.2015 KR 20150076605
(43) Date of publication of application: 30.11.2016
(73) Proprietor: Samsung Electronics Co., Ltd., Gyeonggi-do 16677 (KR)
(72) Inventor: PARK, Kum-Rye, Gyeonggi-do (KR); KIM, Changjong, Gyeonggi-do (KR)
(74) Representative: HGF Limited

(56) References cited:
- EP-A2- 0 987 846
- US-A1- 2010 080 328
- US-B1- 7 173 911
- WORLEY ARIADNE D: "Session Initiation Protocol Service Example -- Music on Hold; rfc7088.txt", SESSION INITIATION PROTOCOL SERVICE EXAMPLE -- MUSIC ON HOLD; RFC7088.TXT, INTERNET ENGINEERING TASK FORCE, IETF; STANDARD, INTERNET SOCIETY (ISOC) 4, RUE DES FALAISES CH- 1205 GENEVA, SWITZERLAND, 11 February 2014 (2014-02-11), pages 1-36, XP015100562, [retrieved on 2014-02-11]

## Description

### TECHNICAL FIELD

The present disclosure relates to a device and method for selectively reproducing a call hold tone in an electronic device.

### BACKGROUND

Thanks to the development of communication technologies, the electronic device has been evolved into a multimedia device which provides various multimedia services using a data communication service as well as a voice call service. For example, the electronic device can provide a call service of a packet switched (PS) type of call service as well as a circuit switched (CS) type of voice call service.

When providing a call service through an Internet Protocol Multimedia Subsystem (IMS)-based PS network, the electronic device may use a PS-based unfixed call channel based on an Internet Protocol (IP). Therefore, the electronic device may increase transmission efficiency compared with the CS type and ensure stability.

US 7,173,911 B1 describes a system and method for music-on-hold in a voice over Internet Protocol (VoIP) environment. EP 0987846 A2 describes an apparatus and method for music-on-hold delivery on a communication network. US 2010/0080328 A1 describes receiver actions and implementations for efficient media handling. A Session Initiation Protocol service example for music-on-hold is described in Internet Engineering Task Force (IETF) Request for Comments (RFC) 7088, D. Worley, Ariadne Internet Services Inc., February 2014, "Session Initiation Protocol Service Example - Music on Hold", pages 1-36.

### SUMMARY

An electronic device may provide a call hold function through an IMS-based PS network while a call service is provided. For example, when a call hold request signal is received from a counterpart electronic device while a call service is being provided, the electronic device may set a call mode as a reception mode for a call hold (recvonly: receive only). In this case, the electronic device may reproduce a call hold tone so that a user recognizes a call hold state.

A method for reproducing the call hold tone may vary according to a network service provider's policy. For example, a first network service provider may require the electronic device to reproduce, as a call hold tone, a sound source which the electronic device receives from a network. A second network service provider may require the electronic device to reproduce, as a call hold tone, a sound source pre-stored in the electronic device. Therefore, when a network service provider is changed, there is inconvenience in that the electronic device has to renew software corresponding to a call hold function of the electronic device so as to respond to a network service provider's service policy.

Further, when reproducing a sound source received from a network as a call hold tone, the electronic device does not receive the call hold tone (sound source) due to a network fault and thus may not reproduce the call hold tone. In this case, a user of the electronic device may not recognize a call hold state and thus may unnecessarily end a call with a counterpart electronic device.

Various embodiments of the present disclosure may provide a device and method for adaptively reproducing a call hold tone in an electronic device.

In accordance with an aspect of the present invention, there is provided an electronic device according to claim 1.

In accordance with another aspect of the present invention, there is provided an operating method according to claim 6.

### BRIEF DESCRIPTION OF THE DRAWINGS

The above and other aspects, features, and advantages of the present disclosure will be more apparent from the following detailed description taken in conjunction with the accompanying drawings, in which:
FIG. 1 illustrates an electronic device in a network environment according to various embodiments of the present disclosure;
FIG. 2 is a block diagram illustrating an electronic device according to various embodiments of the present disclosure;
FIG. 3 is a block diagram illustrating a program module according to various embodiments of the present disclosure;
FIG. 4 is a block diagram illustrating an IMS manager according to various embodiments of the present disclosure;
FIG. 5 is a flowchart illustrating the selective reproduction of a call hold tone by an electronic device according to various embodiments of the present disclosure;
FIG. 6 is a signal flow diagram illustrating the reproduction of a local hold tone by an electronic device according to various embodiments of the present disclosure;
FIG. 7 is a signal flow diagram illustrating the reproduction of a network hold tone by an electronic device according to various embodiments of the present disclosure;
FIG. 8 is a flowchart illustrating the selective reproduction of a network hold tone by an electronic device according to various embodiments of the present disclosure;
FIG. 9 is a signal flow diagram illustrating the selective reproduction of a network hold tone by an electronic device on the basis of session identification information of an RTP packet according to various embodiments of the present disclosure;
FIG. 10 is a signal flow diagram illustrating the selective reproduction of a network hold tone by an electronic device on the basis of session identification information of an RTP packet according to various embodiments of the present disclosure;
FIG. 11 is a flowchart illustrating the selective reproduction of a local hold tone by an electronic device according to various embodiments of the present disclosure;
FIG. 12 is a flowchart illustrating the change of a call hold tone by an electronic device according to various embodiments of the present disclosure;
FIG. 13 is a signal flow diagram illustrating the change of a call hold tone by an electronic device according to various embodiments of the present disclosure;
FIG. 14 is a signal flow diagram illustrating the change of a call hold tone by an electronic device according to various embodiments of the present disclosure.

### DETAILED DESCRIPTION

Hereinafter, various embodiments of the present disclosure will be described with reference to the accompanying drawings. In the following description, specific details such as detailed configuration and components are merely provided to assist the overall understanding of these embodiments of the present disclosure. Therefore, it should be apparent to those skilled in the art that various changes and modifications of the embodiments described herein can be made without departing from the scope of the present disclosure. In addition, descriptions of well-known functions and constructions are omitted for clarity and conciseness.

The present disclosure may have various embodiments, and modifications and changes may be made therein. Therefore, the present disclosure will be described in detail with reference to particular embodiments shown in the accompanying drawings. However, it should be understood that the present disclosure is not limited to the particular embodiments, but includes all modifications/changes, equivalents, and/or alternatives falling within the scope of the present disclosure. In describing the drawings, similar reference numerals may be used to designate similar elements.

The terms "have", "may have", "include", or "may include" used in the various embodiments of the present disclosure indicate the presence of disclosed corresponding functions, operations, elements, and the like, and do not limit additional one or more functions, operations, elements, and the like. In addition, it should be understood that the terms "include" or "have" used in the various embodiments of the present disclosure are to indicate the presence of features, numbers, steps, operations, elements, parts, or a combination thereof described in the specifications, and do not preclude the presence or addition of one or more other features, numbers, steps, operations, elements, parts, or a combination thereof.

The terms "A or B", "at least one of A or/and B" or "one or more of A or/and B" used in the various embodiments of the present disclosure include any and all combinations of words enumerated with it. For example, "A or B", "at least one of A and B" or "at least one of A or B" means (1) including at least one A, (2) including at least one B, or (3) including both at least one A and at least one B.

Although the term such as "first" and "second" used in various embodiments of the present disclosure may modify various elements of various embodiments, these terms do not limit the corresponding elements. For example, these terms do not limit an order and/or importance of the corresponding elements. These terms may be used for the purpose of distinguishing one element from another element. For example, a first user device and a second user device all indicate user devices and may indicate different user devices. For example, a first element may be named a second element without departing from the scope of right of various embodiments of the present disclosure, and similarly, a second element may be named a first element.

It will be understood that when an element (e.g., first element) is "connected to" or "(operatively or communicatively) coupled with/to" to another element (e.g., second element), the element may be directly connected or coupled to another element, and there may be an intervening element (e.g., third element) between the element and another element. To the contrary, it will be understood that when an element (e.g., first element) is "directly connected" or "directly coupled" to another element (e.g., second element), there is no intervening element (e.g., third element) between the element and another element.

The expression "configured to (or set to)" used in various embodiments of the present disclosure may be replaced with "suitable for", "having the capacity to", "designed to", " adapted to", "made to", or "capable of" according to a situation. The term "configured to (set to)" does not necessarily mean "specifically designed to" in a hardware level. Instead, the expression "apparatus configured to..." may mean that the apparatus is "capable of..." along with other devices or parts in a certain situation. For example, "a processor configured to (set to) perform A, B, and C" may be a dedicated processor, e.g., an embedded processor, for performing a corresponding operation, or a generic-purpose processor, e.g., a Central Processing Unit (CPU) or an application processor(AP), capable of performing a corresponding operation by executing one or more software programs stored in a memory device.

The terms as used herein are used merely to describe certain embodiments and are not intended to limit the present disclosure. As used herein, singular forms may include plural forms as well unless the context explicitly indicates otherwise. Further, all the terms used herein, including technical and scientific terms, should be interpreted to have the same meanings as commonly understood by those skilled in the art to which the present disclosure pertains, and should not be interpreted to have ideal or excessively formal meanings unless explicitly defined in various embodiments of the present disclosure.

An electronic device according to various embodiments of the present disclosure, for example, may include at least one of a smartphone, a tablet personal computer (PC), a mobile phone, a video phone, an electronic book (e-book) reader, a desktop PC, a laptop PC, a netbook computer, a workstation, a server, a personal digital assistant (PDA), a portable multimedia player (PMP), an MP3 player, a mobile medical appliance, a camera, and a wearable device (e.g., smart glasses, a head-mounted-device (HMD), electronic clothes, an electronic bracelet, an electronic necklace, an electronic appcessory, an electronic tattoo, a smart mirror, or a smart watch).

According to some embodiments, the electronic device may be a smart home appliance. The home appliance may include at least one of, for example, a television, a Digital Video Disk (DVD) player, an audio, a refrigerator, an air conditioner, a vacuum cleaner, an oven, a microwave oven, a washing machine, an air cleaner, a set-top box, a home automation control panel, a security control panel, a TV box (e.g., Samsung HomeSync™, Apple TV™, or Google TV™), a game console (e.g., Xbox™ and PlayStation™), an electronic dictionary, an electronic key, a camcorder, and an electronic photo frame.

According to another embodiment, the electronic device may include at least one of various medical devices (e.g., various portable medical measuring devices (a blood glucose monitoring device, a heart rate monitoring device, a blood pressure measuring device, a body temperature measuring device, etc.), a Magnetic Resonance Angiography (MRA), a Magnetic Resonance Imaging (MRI), a Computed Tomography (CT) machine, and an ultrasonic machine), a navigation device, a Global Positioning System (GPS) receiver, an Event Data Recorder (EDR), a Flight Data Recorder (FDR), a Vehicle Infotainment Devices, an electronic devices for a ship (e.g., a navigation device for a ship, and a gyrocompass), avionics, security devices, an automotive head unit, a robot for home or industry, an automatic teller's machine (ATM) in banks, point of sales (POS) in a shop, or internet device of things (e.g., a light bulb, various sensors, electric or gas meter, a sprinkler device, a fire alarm, a thermostat, a streetlamp, a toaster, a sporting goods, a hot water tank, a heater, a boiler, etc.).

According to some embodiments, the electronic device may include at least one of a part of furniture or a building/structure, an electronic board, an electronic signature receiving device, a projector, and various kinds of measuring instruments (e.g., a water meter, an electric meter, a gas meter, and a radio wave meter). The electronic device according to various embodiments of the present disclosure may be a combination of one or more of the aforementioned various devices. The electronic device according to some embodiments of the present disclosure may be a flexible device. Further, the electronic device according to an embodiment of the present disclosure is not limited to the aforementioned devices, and may include a new electronic device according to the development of technology

Hereinafter, an electronic device according to various embodiments will be described with reference to the accompanying drawings. As used herein, the term "user" may indicate a person who uses an electronic device or a device (e.g., an artificial intelligence electronic device) that uses an electronic device.

In the description below, an electronic device may provide a call service with a counterpart electronic device through a packet switched (PS) network based on an Internet Protocol Multimedia Subsystem (IMS). For example, the electronic device may provide a voice call service with the counterpart electronic device through Voice over Wireless Fidelity (VoWiFI), Voice over Long Term Evolution (VoLTE), or Voice over High Speed Packet Access (VoHSPA).

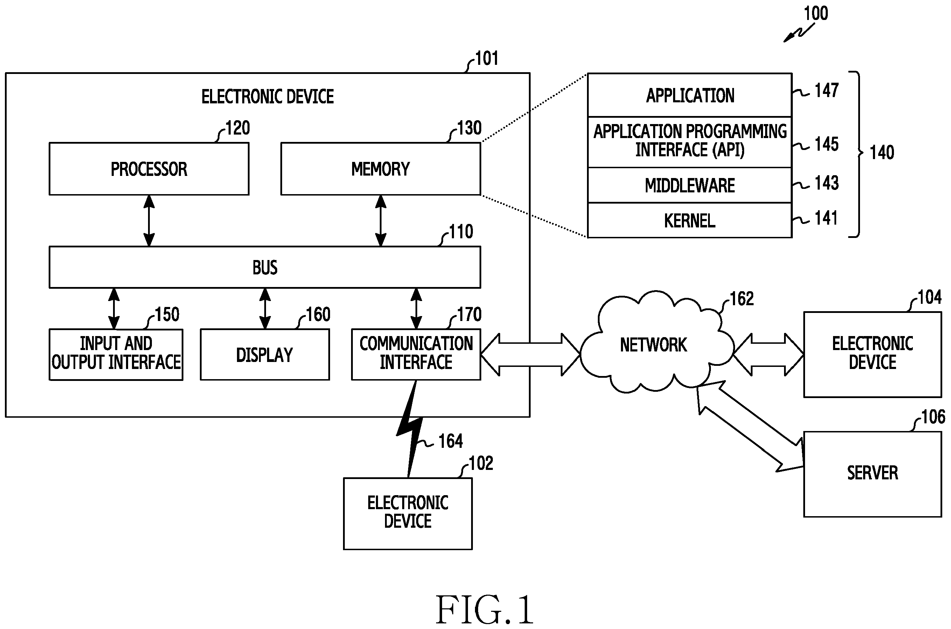

With reference to FIG. 1, an electronic device 101 in a network environment 100 is illustrated in various embodiments. The electronic device 101 may include a bus 110, a processor 120, a memory 130, an input/output interface 150, a display 160, and a communication interface 170. In some embodiments, the electronic device 101 may omit at least one of the above elements or may further include other elements.

The bus 110 may include, for example, a circuit which interconnects the elements 120 to 170 and delivers communication (for example, a control message and/or data) between the elements 120 to 170.

The processor 120 may include one or more of a Central Processing Unit (CPU), an Application Processor (AP) and a Communication Processor (CP). The processor 120 may carry out, for example, operations or data processing relating to control and/or communication of one or more other elements of the electronic device 101.

According to an embodiment, the processor 120 may provide a call service with a counterpart electronic device (e.g., a second external electronic device 104), using a PS network.

According to an embodiment, the processor 120 may set a call hold while a call service is being providing. For example, when a call hold request signal is received from the counterpart electronic device through the communication interface 170, the processor 120 may perform a Session Initiation Protocol (SIP) signaling for a call hold, thereby setting the call hold. For example, the processor 120 may set a call mode of the electronic device 101 as a reception mode for a call hold (i.e., recvonly). For example, the processor 120 may control the communication interface 170 to transmit a call hold request signal to the counterpart electronic device in response to the occurrence of a call hold event. The processor 120 may set the call mode of the electronic device 101 as a transmission mode for a call hold (i.e., sendonly). For example, the processor 120 may detect the occurrence of a call hold event on the basis of at least one of input information detected through the input/output interface 150 and sensor data detected through a sensor module.

According to an embodiment, when a call hold is set, the processor 120 may control to reproduce a call hold tone. For example, the processor 120 may selectively determine a call hold tone for reproducing the call hold tone on the basis of whether a real-time transport protocol (RTP) packet is received during a reference session (or reference expiration session) from a time point at which a call hold is set (e.g., reception mode setting time point).

According to an embodiment, when the RTP packet has not been received during the reference session, the processor 120 may control to reproduce a call hold tone stored in the memory 130. For example, the call hold tone stored in the memory 130 may include a network hold tone or a local hold tone, received from a network and previously reproduced in the electronic device 101. Here, the network hold tone may indicate a sound source received from the network and the local hold tone may indicate a reference call hold tone preset in the electronic device 101.

According to an embodiment, when the RTP packet is received while the call hold tone stored in the memory 130 is being reproduced, the processor 120 may control to change a call hold tone to a network hold tone.

According to an embodiment, when the RTP packet is received during a reference session, the processor 120 may control to reproduce a network hold tone. In this case, the processor 120 may selectively reproduce the network hold tone on the basis of session identification information of the RTP packet. For example, when the session identification information of an RTP packet is different from identification information of a call session, the processor 120 may reproduce a sound source included in the RTP packet. For example, when session identification information of an RTP packet is the same as identification information of a call session, the processor 120 may reproduce a sound source included in an RTP packet received after a packet discarding session. The processor 120 may recognize an RTP packet received during the packet discarding session as a delayed packet corresponding to a call service and discard the RTP packet. Here, the session identification information may include a synchronization source identifier (SSRC).

According to an embodiment, when a next RTP packet is not received during a reference session from a time point at which an RTP packet is received while a network hold tone is reproduced, the processor 120 may change a call hold tone to a call hold tone stored in the memory 130.

The memory 130 may include a volatile memory and/or a non-volatile memory. The memory 130 may store, for example, instructions or data (e.g., local hold tone or network hold tone) related to one or more other elements of the electronic device 101. According to an embodiment, the memory 130 may store software and/or a program 140. For example, the program 140 may include a kernel 141, a middleware 143, an Application Programming Interface (API) 145, an application program (or "application") 147, etc. At least some of the kernel 141, the middleware 143, and the API 145 may be referred to as an Operating System (OS).

The input/output interface 150 may function as, for example, an interface that may transfer instructions or data input from a user or another external device to the other element(s) of the electronic device 101. Furthermore, the input/output interface 150 may output the instructions or data received from the other element(s) of the electronic device 101 to the user or another external device.

According to an embodiment, the input/output interface 150 may include an audio processing unit, a speaker, and a microphone, for a voice call service. For example, the audio processing unit may reproduce a call hold tone to output the reproduced call hold tone through the speaker, and transmit an audio signal collected through the microphone to a counterpart electronic device.

The display 160 may display, for example, various types of contents (for example, text, images, videos, icons, or symbols) for the user. The display 160 may include a touch screen and receive, for example, a touch, gesture, proximity, or hovering input using an electronic pen or the user's body part.

The communication interface 170 may set communication between, for example, the electronic device 101 and an external device (for example, a first external electronic device 102, a second external electronic device 104, or a server 106). For example, the communication interface 170 may be connected to a network 162 through wireless or wired communication to communicate with the external device (for example, the second external electronic device 104 or the server 106). For example, the communication interface 170 may communicate with the external device (for example, the first external electronic device 102) through short range communication 164.

The network 162 may include at least one of communication networks, such as a computer network (e.g., a LAN or a WAN), the Internet, and a telephone network.

Each of the first and second external electronic devices 102 and 104 may be a device which is identical to or different from the electronic device 101. According to an embodiment, the server 106 may include a group of one or more servers. According to various embodiments, all or some of the operations performed in the electronic device 101 may be performed in another electronic device or a plurality of electronic devices (e.g., the electronic devices 102 and104 or the server 106). According to an embodiment, when the electronic device 101 has to perform some functions or services automatically or in response to a request, the electronic device 101 may make a request for performing at least some functions relating thereto to another device (for example, the electronic device 102 or 104, or the server 106) instead of performing the functions or services by itself or in addition. Another electronic device (for example, the electronic device 102 or 104, or the server 106) may execute the requested functions or the additional functions, and may deliver a result of the execution to the electronic device 101. The electronic device 101 may process the received result as it is or additionally to provide the requested functions or services. To achieve this, for example, cloud computing, distributed computing, or client-server computing technology may be used.

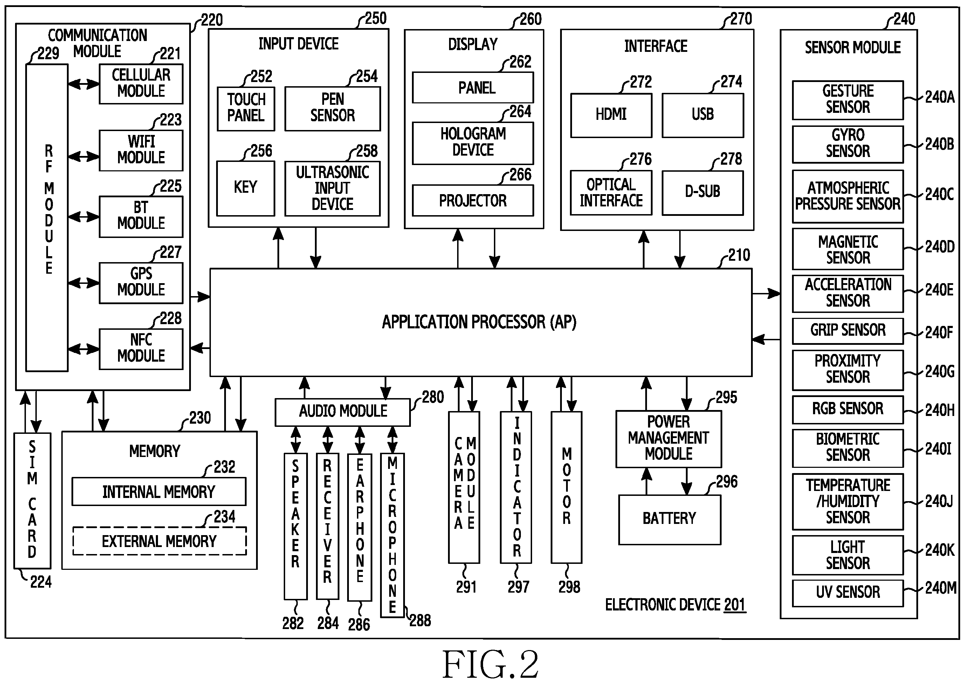

FIG. 2 is a block diagram of an electronic device 201 according to various embodiments. The electronic device 201 may include, for example, all or a part of the electronic device 101 illustrated in FIG. 1. The electronic device 201 may include at least one application processor (AP) 210, a communication module 220, a subscriber identification module (SIM) card 224, a memory 230, a sensor module 240, an input device 250, a display 260, an interface 270, an audio module 280, a camera module 291, a power management module 295, a battery 296, an indicator 297, and a motor 298.

The AP 210 may, for example, control a plurality of hardware or software elements connected thereto and perform a variety of data processing and calculations by driving an operating system or application programs. The AP 210 may be implemented as, for example, a system on chip (SoC). According to an embodiment, the AP 210 may further include a graphic processing unit (GPU) and/or an image signal processor. The AP 210 may include at least some of the elements (e.g., a cellular module 221) illustrated in FIG. 2. The AP 210 may load commands or data, received from at least one other element (e.g., a non-volatile memory), in a volatile memory to process the loaded commands or data, and may store various types of data in the non-volatile memory. The processor 210 may load, into a volatile memory, instructions or data received from at least one (for example, a non-volatile memory) of the other elements and may process the loaded instructions or data, and may store various data in a non-volatile memory.

The communication module 220 may have a configuration that is the same as or similar to that of the communication interface 170 of FIG. 1. The communication module 220 may include, for example, a cellular module 221, a Wi-Fi module 223, a BT module 225, a GPS module 227, an NFC module 228, and a radio frequency (RF) module 229. The communication module 220 provides a function of transmitting/receiving a signal. Accordingly, the communication module 220 may be referred to as a "reception unit", a "transmission unit", a "transmission and reception unit", a "communication unit", or the like.

The cellular module 221 may provide, for example, a voice call, a video call, a text message service, or an Internet service through a communication network. According to an embodiment, the cellular module 221 may distinguish and authenticate the electronic device 201 in the communication network by using a subscriber identification module (e.g., the SIM card 224). According to an embodiment, the cellular module 221 may perform at least some of the functions that the AP 210 may provide. According to an embodiment, the cellular module 221 may include a communication processor (CP).

The Wi-Fi module 223, the BT module 225, the GPS module 227, or the NFC module 228 may include, for example, a processor for processing data transmitted/received through the corresponding module. According to an embodiment, at least some (e.g., two or more) of the cellular module 221, the Wi-Fi module 223, the BT module 225, the GPS module 227, and the NFC module 228 may be included in a single integrated chip (IC) or IC package.

The RF module 229 may, for example, transmit/receive a communication signal (e.g., an RF signal). The RF module 229 may include, for example, a transceiver, a power amp module (PAM), a frequency filter, a low noise amplifier (LNA), or an antenna. According to another embodiment, at least one of the cellular module 221, the Wi-Fi module 223, the BT module 225, the GPS module 227, and the NFC module 228 may transmit/receive an RF signal through a separate RF module.

The SIM card 224 may include, for example, a card including a subscriber identification module and/or an embedded SIM, and may further include unique identification information (e.g., an integrated circuit card identifier (ICCID)) or subscriber information (e.g., international mobile subscriber identity (IMSI)).

The memory 230 may include, for example, an internal memory 232 or an external memory 234. The internal memory 232 may include, for example, at least one of a volatile memory (e.g., a dynamic random access memory (DRAM), a static RAM (SRAM), a synchronous dynamic RAM (SDRAM), or the like) and a non-volatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash memory or a NOR flash memory), a hard disc drive, or a solid state drive (SSD)).

The external memory 234 may further include a flash drive, for example, a compact flash (CF), a secure digital (SD), a micro secure digital (Micro-SD), a mini secure digital (Mini-SD), an extreme digital (xD), a memory stick, or the like. The external memory 234 may be functionally and/or physically connected to the electronic device 201 through various interfaces.

The sensor module 240 may, for example, measure a physical quantity or detect an operating state of the electronic device 201, and may convert the measured or detected information into an electrical signal. The sensor module 240 may include, for example, at least one of, a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (e.g., red, green, and blue (RGB) sensor), a bio-sensor 240I, a temperature/humidity sensor 240J, an illumination sensor 240K, and a ultra violet (UV) sensor 240M. Additionally or alternatively, the sensor module 240 may include an E-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 240 may further include a control circuit for controlling one or more sensors included therein. In an embodiment, the electronic device 201 may further include a processor that is configured as a part of the AP 210 or a separate element from the AP 210 in order to control the sensor module 240, thereby controlling the sensor module 240 while the AP 2710 is in a sleep state.

The input device 250 may include, for example, a touch panel 252, a (digital) pen sensor 254, a key 256, or an ultrasonic input device 258. The touch panel 252 may use at least one of, for example, a capacitive type, a resistive type, an infrared type, and an ultrasonic type. In addition, the touch panel 252 may further include a control circuit. The touch panel 252 may further include a tactile layer to provide a tactile reaction to a user.

The (digital) pen sensor 254 may be, for example, a part of the touch panel, or may include a separate recognition sheet. The key 256 may include, for example, a physical button, an optical key, or a keypad. The ultrasonic input device 258 may identify data by detecting acoustic waves with a microphone (e.g., a microphone 288) of the electronic device 201 through an input unit for generating an ultrasonic signal.

The display 260 (e.g., the display 160) may include a panel 262, a hologram device 264, or a projector 266. The panel 262 may include a configuration that is the same as or similar to that of the display 160 of FIG. 1. The panel 262 may be implemented to be, for example, flexible, transparent, or wearable. The panel 262 may be configured as a single module integrated with the touch panel 252. The hologram device 264 may show a stereoscopic image in the air using interference of light. The projector 266 may project light onto a screen to display an image. The screen may be located, for example, in the interior of or on the exterior of the electronic device 201. According to an embodiment, the display 260 may further include a control circuit for controlling the panel 262, the hologram device 264, or the projector 266.

The interface 270 may include, for example, a high-definition multimedia interface (HDMI) 272, a universal serial bus (USB) 274, an optical interface 276, or a D-subminiature (D-sub) 278. The interface 270 may be included in, for example, the communication interface 170 illustrated in FIG. 1. Additionally or alternatively, the interface 270 may include, for example, a mobile high-definition link (MHL) interface, a secure digital (SD) card/multi-media card (MMC) interface, or an infrared data association (IrDA) standard interface.

The audio module 280 may, for example, convert a sound into an electrical signal, and vice versa. At least some elements of the audio module 280 may be included in, for example, the input/output interface 150 illustrated in FIG. 1. The audio module 280 may, for example, process sound information that is input or output through the speaker 282, the receiver 284, the earphones 286, the microphone 288, or the like.

The camera module 291 may be, for example, a device that can take a still image or a moving image, and according to an embodiment, the camera module 291 may include one or more image sensors (e.g., a front sensor or a rear sensor), a lens, an image signal processor (ISP), or a flash (e.g., an LED or a xenon lamp).

The power management module 295 may, for example, manage power of the electronic device 201. According to an embodiment, the power management module 295 may include a Power Management Integrated Circuit (PMIC), a charger IC, or a battery or fuel gauge. The PMIC may use a wired and/or wireless charging method. Examples of the wireless charging method may include, for example, a magnetic resonance method, a magnetic induction method, an electromagnetic method, and the like. Additional circuits (e.g., a coil loop, a resonance circuit, a rectifier, etc.) for wireless charging may be further included. The battery gauge may measure, for example, a residual quantity of the battery 396, and a voltage, a current, or a temperature during the charging. The battery 396 may include, for example, a rechargeable battery or a solar battery.

The indicator 297 may indicate a specific state of the electronic device 201 or a part thereof (e.g., the AP 210), for example, a booting state, a message state, a charging state, or the like. The motor 298 may convert an electrical signal into a mechanical vibration, and may generate a vibration or haptic effect. Although not illustrated, the electronic device 201 may include a processing unit (e.g., a GPU) for mobile TV support. The processing device for mobile TV support may, for example, process media data according to a standard of digital multimedia broadcasting (DMB), digital video broadcasting (DVB), media flow, or the like.

Each of the components of the electronic device according to the present disclosure may be implemented by one or more components and the name of the corresponding component may vary depending on a type of the electronic device. In various embodiments, the electronic device may include at least one of the above-described elements. Some of the above-described elements may be omitted from the electronic device, or the electronic device may further include additional elements. Further, some of the elements of the electronic device according to various embodiments of the present disclosure may be coupled to form a single entity while performing the same functions as those of the corresponding elements before the coupling.

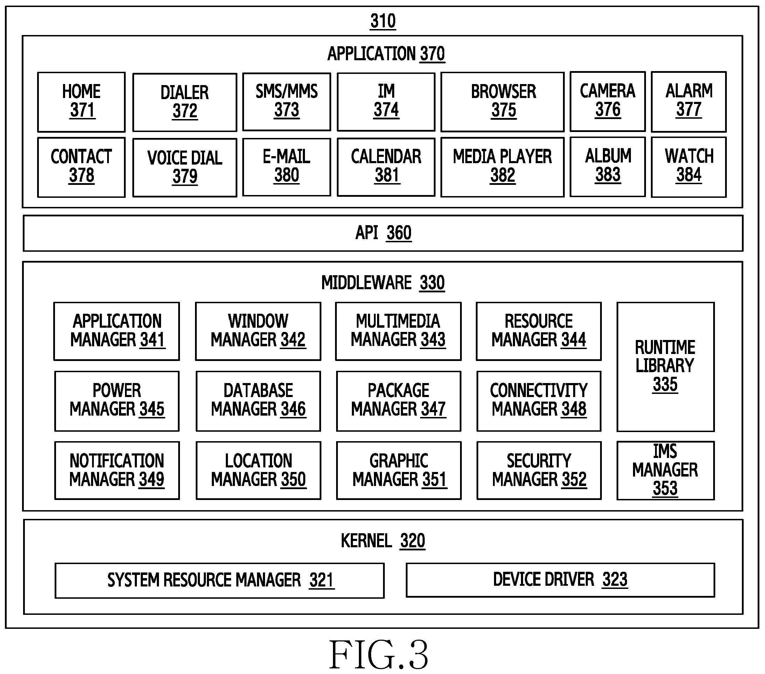

FIG. 3 is a block diagram of a program module 310 according to various embodiments. According to an embodiment, the program module 310 (e.g., the program 140) may include an operating system (OS) that controls resources relating to an electronic device (e.g., the electronic device 101) and/or various applications (e.g., the application 147) executed in the operating system. The operating system may be, for example, Android, iOS™, Windows™, Symbian™, Tizen™, Bada™, or the like.

The programming module 310 may include a kernel 320, middleware 330, an application programming interface (API) 360, and/or applications 370. At least some of the program module 310 may be preloaded in the electronic device, or may be downloaded from a external electronic device (e.g., the electronic device (102, 104), the server 106).

The kernel 320 (e.g., the kernel 141 of FIG. 1) may include, for example, a system resource manager 321 or a device driver 323. The system resource manager 321 may control, allocate, or collect system resources. According to an embodiment, the system resource manager 321 may include a process management unit, a memory management unit, or a file system management unit. The device driver 323 may include, for example, a display driver, a camera driver, a Bluetooth driver, a shared-memory driver, a USB driver, a keypad driver, a Wi-Fi driver, an audio driver, or an inter-process communication (IPC) driver.

The middleware 330 may provide, for example, a function commonly required by the applications 370, or may provide various functions to the applications 370 through the API 360 so that the applications 370 can efficiently use limited system resources within the electronic device. According to an embodiment, the middleware 330 (for example, the middleware 143) may include, for example, at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, a security manager 352, and an IMS manager 353.

The runtime library 335 may include a library module which a compiler uses in order to add a new function through a programming language while the applications 370 are being executed. The runtime library 335 may perform input/output management, memory management, the functionality for an arithmetic function, or the like.

The application manager 341 may manage, for example, a life cycle of at least one of the applications 370. The window manager 342 may manage Graphical User Interface (GUI) resources used for the screen. The multimedia manager 343 may determine a format required to reproduce various media files, and may encode or decode a media file by using a coder/decoder (codec) appropriate for the corresponding format. The resource manager 344 may manage resources, such as a source code, a memory, a storage space, and the like of at least one of the applications 370.

The power manager 345 may operate together with a Basic Input/Output System (BIOS) to manage a battery or power, and may provide power information required for the operation of the electronic device. According to an embodiment, the power manager 345 may perform a control so that a charge or discharge of a battery is provided through at least one of a wired manner and a wireless manner.

The database manager 346 may generate, search for, or change a database to be used by at least one of the applications 370. The package manager 347 may manage the installation or update of an application distributed in the form of a package file.

The connectivity manager 348 may manage a wireless connection such as WiFi or Bluetooth. The notification manager 349 may display or notify of an event, such as an arrival message, an appointment, a proximity notification, and the like, in such a manner as not to disturb the user. The location manager 350 may manage location information of the electronic device. The graphic manager 351 may manage a graphic effect, which is to be provided to the user, or a user interface related to the graphic effect. The security manager 352 may provide various security functions required for system security, user authentication, and the like. The IMS manager 353 may provide multimedia services, such as a voice, an audio, a video, data, and the like, on the basis of an Internet Protocol (IP).

According to an embodiment, when the electronic device (for example, the electronic device 101) has a telephone call function, the middleware 330 may further include a telephony manager for managing a voice call function or a video call function of the electronic device.

The middleware 330 may include a middleware module that forms a combination of various functions of the above-described elements. The middleware 330 may provide a specialized module according to each operating system in order to provide a differentiated function. Also, the middleware 330 may dynamically delete some of the existing elements, or may add new elements.

The API 360 (for example, the API 145) is, for example, a set of API programming functions, and may be provided with a different configuration according to an OS. For example, in the case of Android or iOS, one API set may be provided for each platform. In the case of Tizen, two or more API sets may be provided for each platform.

The applications 370 (for example, the application programs 147) may include, for example, one or more applications which can provide functions such as a home 371, a dialer 372, a SMS/MMS 373, an Instant Message (IM) 374, a browser 375, a camera 376, an alarm 377, contacts 378, a voice dialer 379, an email 380, a calendar 381, a media player 382, an album 383, a clock 384, health care (for example, measure exercise quantity or blood sugar), or environment information (for example, atmospheric pressure, humidity, or temperature information).

According to an embodiment, in the case of a call hold, the applications 370 may include an application which selectively reproduces a call hold tone on the basis of a control signal received from the IMS manager 353. For example, the dialer 372 may provide a call service and a call hold tone reproducing service.

According to an embodiment, the applications 370 may include an application (hereinafter, referred to as an "information exchange application" for convenience of description) supporting information exchange between the electronic device (for example, the electronic device 101) and an external electronic device (for example, the electronic device 102 or 104). The information exchange application may include, for example, a notification relay application for transferring specific information to an external electronic device or a device management application for managing an external electronic device.

For example, the notification relay application may include a function of transferring, to the external electronic device (for example, the electronic device 102 or 104), notification information generated from other applications of the electronic device (for example, an SMS/MMS application, an e-mail application, a health care application, or an environmental information application). Further, the notification relay application can, for example, receive notification information from the external electronic device and provide the received notification information to a user.

The device management application may manage (for example, install, delete, or update), for example, at least one function of an external electronic device (for example, the electronic device 102 or 104) communicating with the electronic device (for example, a function of turning on/off the external electronic device itself (or some elements) or a function of adjusting luminance (or a resolution) of the display), applications operating in the external electronic device, or services provided by the external electronic device (for example, a call service and a message service).

According to an embodiment, the applications 370 may include applications (for example, a health care application of a mobile medical appliance) designated according to attributes of the external electronic device (for example, the electronic device 102 or 104). According to an embodiment, the applications 370 may include an application received from the external electronic device (for example, the server 106, or the electronic device 102 or 104). According to an embodiment, the applications 370 may include a preloaded application or a third party application which can be downloaded from the server. Names of the elements of the program module 310 according to the above-illustrated embodiments may change depending on the type of OS.

According to various embodiments, at least some of the program module 310 may be implemented in software, firmware, hardware, or a combination of two or more thereof. At least some of the program module 310 may be implemented (e.g., executed) by, for example, the processor (e.g., the processor 210). At least some of the program module 310 may include, for example, a module, a program, a routine, a set of instructions, and/or a process, for performing one or more functions.

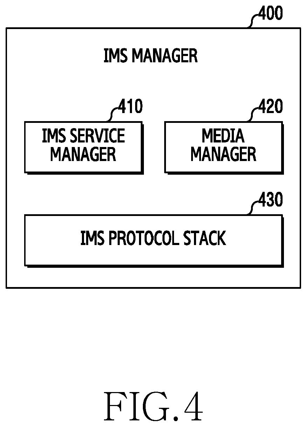

FIG. 4 is a block diagram illustrating an IMS manager according to various embodiments of the present disclosure.

Referring to FIG. 4, an IMS manager 400 (for example, the IMS manager 353) may include an IMS service manager (IMS enabler) 410, a media manager 420, and an IMS protocol stack 430 and provide a multimedia service on the basis of an Internet Protocol (IP).

The IMS service manager 410 may control an IMS-based service function. For example, the IMS service manager 410 may include a call service processing module, a message processing module, and a module for processing a Rich Communication Suite (RCS)-related service function.

According to an embodiment, the IMS service manager 410 may set and control a call hold function while a call service using an IMS-based PS network is being providing. For example, the IMS service manager 410 may set the call mode of the electronic device (for example, the electronic device 101) as a reception mode, in response to a call hold request signal. For example, the IMS service manager 410 may transmit, to an application (for example, the applications 370), control information for selecting a call hold tone on the basis of whether the media manager 420 receives an RTP packet.

The media manager 420 may include a device and software required to process video data and audio data. For example, the media manager 420 may include at least one of a video engine, which includes a device and software required to process video data, and an audio engine, which includes a device and software required to process audio data.

According to an embodiment, the media manager 420 may receive an RTP packet from a network. The media manager 420 may provide RTP packet reception information to the IMS service manager 410. For example, the media manager 420 may determine whether an RTP packet is received, on the basis of session identification information of the RTP packet. Specifically, when the media manager 420 receives session identification information identical to identification information of a call session after a call hold has been set, the media manager 420 may set a packet discarding session. The media manager 420 may recognize an RTP packet received during the packet discarding session as a delayed packet and discard the RTP packet.

The IMS protocol stack 430 may communicate with an IMS-based PS network. For example, the IMS protocol stack 430 includes protocols defined in IMS Standards, such as a Session Description Protocol (SDP), a Real-time Transport Protocol (RTP), a Real-time Transport Control Protocol (RTCP), a Real-time Transport Streaming Protocol (RTSP), a Message Session Relay Protocol (MSRP), a Hyper Transfer Text Protocol (HTTP), and the like.

According to various embodiments of the present disclosure, the electronic device includes: a communication interface configured to transmit/receive data for a voice call with a counterpart electronic device through a packet network; a processor electrically connected to the communication interface; and a memory electrically connected to the processor, wherein the memory, at the time of execution, may store instructions which instruct the processor to set a call hold in response to a request made by the counterpart electronic device, to determine whether a Real-time Transport Protocol (RTP) packet is received during a reference session, and to selectively reproduce a call hold tone in response to whether the RTP packet is received during the reference session.

According to various embodiments, when the processor has not received the RTP packet during the reference session, the instructions may instruct the processor to reproduce a call hold tone pre-stored in the electronic device.

According to various embodiments, when the processor receives an RTP packet while the pre-stored call hold tone is being reproduced, the instructions may instruct the processor to change the pre-stored call hold tone to a call hold tone corresponding to the RTP packet.

According to various embodiments, when the processor receives an RTP packet during the reference session, the instructions may instruct the processor to reproduce a call hold tone corresponding to the RTP packet.

According to various embodiments, when session identification information of the RTP packet is different from identification information of a call session, the instructions may instruct the processor to reproduce a call hold tone corresponding to the RTP packet.

According to various embodiments, the session identification information may include a Synchronization Source Identifier (SSRC).

According to various embodiments, when session identification information of the RTP packet is identical to identification information of a call session, the instructions may instruct the processor to set a packet discarding session and reproduce a call hold tone corresponding to an RTP packet received after the packet discarding session.

According to various embodiments, when the processor receives an RTP packet during the reference session, the instructions may instruct the processor to reproduce a call hold tone corresponding to the RTP packet.

According to various embodiments, when the processor has not received an RTP packet during the reference session while a call hold tone corresponding to the RTP packet is being reproduced, the instructions may instruct the processor to change a call hold tone to a call hold tone which corresponds to the RTP packet and is stored in the memory.

According to various embodiments, when the processor has not received an RTP packet during the reference session while a call hold tone corresponding to the RTP packet is being reproduced, the instructions may instruct the processor to change a call hold tone to a call hold tone pre-stored in the electronic device.

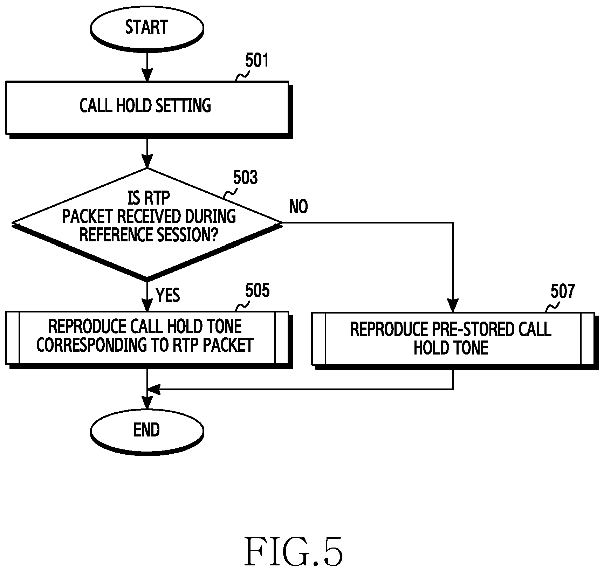

FIG. 5 is a flowchart illustrating the selective reproduction of a call hold tone by an electronic device according to various embodiments of the present disclosure.

Referring to FIG. 5, in operation 501, the electronic device (for example, the electronic device 101) may set a call hold while a call service is being provided. For example, the processor 120 may control to provide a voice call service with a counterpart electronic device (e.g., the external electronic device 104) through a PS network. The processor 120 may set the call mode of the electronic device as a reception mode in response to a call hold request signal received from the counterpart electronic device while the voice call service is being provided.

In operation 503, after a call hold is set, the electronic device may determine whether an RTP packet is received during a reference session (or a reference expiration session) (e.g., 1-2 seconds).

In operation 505, when an RTP packet is received from a network during the reference session, the electronic device may reproduce a call hold tone corresponding to the RTP packet. For example, the processor 120 may reproduce a call hold tone based on an RTP packet on the basis of session identification information (e.g., SSRC) of the RTP packet. Specifically, when an RTP packet includes identification information different from identification information of a call session, the processor 120 may reproduce a sound source, which is included in the RTP packet, as a call hold tone. When an RTP packet includes identification information identical to identification information of a call session, the processor 120 may reproduce a sound source as a call hold tone corresponding to an RTP packet received after a packet discarding session.

In operation 507, when an RTP packet is not received from a network during the reference session, the electronic device may reproduce a pre-stored call hold tone. For example, the processor 120 may reproduce a local hold tone stored in a memory (for example, the memory 130). For example, the processor 120 may reproduce a network hold tone stored in the memory.

According to various embodiments of the present disclosure, when reproducing a call hold tone received from a network, the electronic device may store the call hold tone in a memory (for example, the memory 130).

According to various embodiments of the present disclosure, after a call hold is set, the electronic device may reproduce a local hold tone or a pre-stored call hold notification broadcasting during a reference session. For example, the electronic device may reproduce the call hold notification broadcasting, such as "a call hold tone is being selected", "a call hold has been set", or the like.

According to various embodiments of the present disclosure, the electronic device may display call hold state information on a display (for example, the display 160) in response to call hold setting.

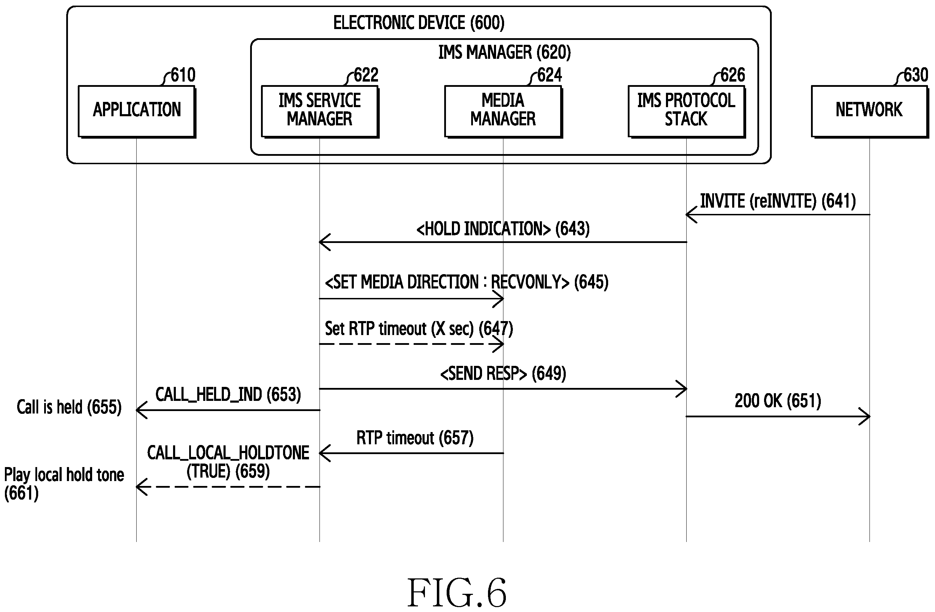

FIG 6 is a signal flow diagram illustrating the reproduction of a local hold tone by an electronic device according to various embodiments of the present disclosure.

Referring to FIG. 6, an IMS protocol stack 626 (for example, the IMS protocol stack 430 or an SIP protocol stack) of an electronic device 600 (for example, the electronic device 101) may receive a call hold request signal (SIP invite (reinvite)) from a network 630 (operation 641). For example, the electronic device 600 may establish a session for a voice call with a counterpart electronic device (for example, the electronic device 104) through an IMS-based PS network. An SIP of the IMS protocol stack 626 may receive, through the network 630, a call hold request signal sent by the counterpart electronic device while a voice call service is being providing.

The IMS protocol stack 626 may transmit call hold indication information (hold indication) to an IMS service manager 622 (for example, the IMS service manager 410) in response to the call hold request signal (operation 643).

The IMS service manager 622 may set the call mode of the electronic device as a reception mode for a call hold (i.e., recvonly) in response the call hold indication information. The IMS service manager 622 may transmit reception mode setting information (media direction: recvonly) to a media manager 624 (for example, the media manager 420) (operation 645).

The IMS service manager 622 may transmit, to the media manager 624, reference expiration session information (RTP timeout) for determining whether an RTP packet is received in response to a call hold setting (reception mode setting) (operation 647).

After the call hold is set, the IMS service manager 622 may transmit call hold setting information (send resp) to the IMS protocol stack 626 (operation 649).

The IMS protocol stack 626 may transmit a call hold setting completion information (200 OK) to the counterpart electronic device through the network 630 in response to the call hold setting information (operation 651).

The IMS service manager 622 may transmit call hold indication information (call held ind) to an application 610 (for example, the applications 370) in response to the call hold setting (reception mode setting) (operation 653). The application 610 (for example, the dialer 372) may switch a voice call service with the counterpart electronic device into a call hold state (for example, reception mode) on the basis of the call hold indication information (operation 655).

When the media manager 624 has not received an RTP packet from the network 630 during a reference expiration session received from the IMS service manager 622, the media manager 624 may transmit RTP timeout information (RPT timeout) to the IMS service manager 622 (operation 657).

The IMS service manager 622 may transmit local hold tone reproducing indication information to the application 610 in response to the RTP timeout information (operation 659).

The application 610 may reproduce the local hold tone in response to the local hold tone reproducing indication information (operation 611). For example, the application 610 (for example, the dialer 372) may reproduce a reference call hold tone stored in a memory (for example, the memory 130).

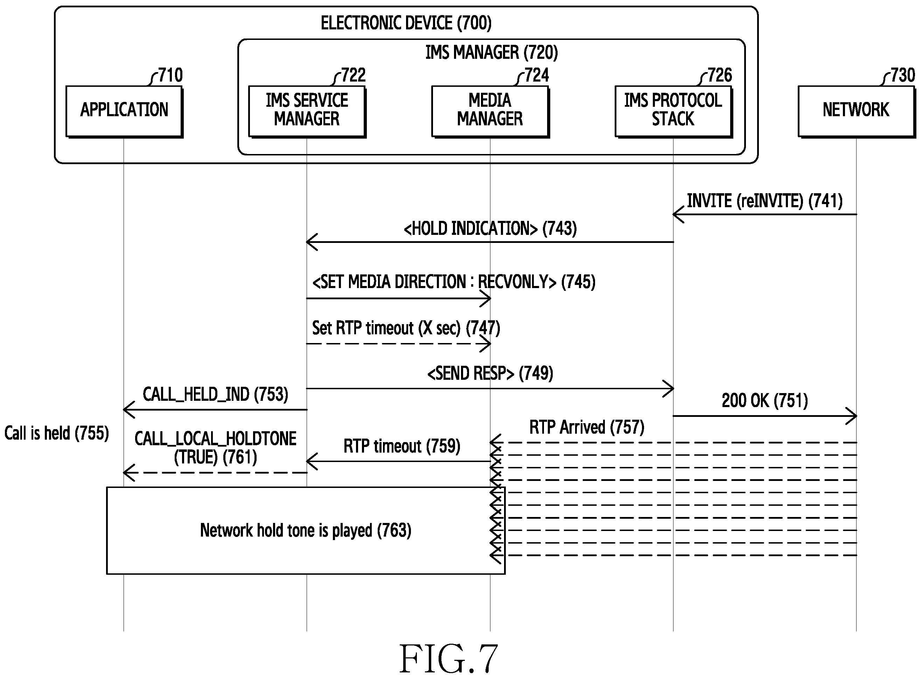

FIG 7 is a signal flow diagram illustrating the reproduction of a network hold tone by an electronic device according to various embodiments of the present disclosure.

Referring to FIG. 7, an electronic device 700 (for example, the electronic device 101) may set a voice call service with a counterpart electronic device as a hold state (for example, reception mode) on the basis of a call hold request signal (SIP invite (reinvite)) received from a network 730 (operations 741 to 755). Here, a signal flow (operations 741 to 755) in an electronic device, which sets voice call service as a hold state, illustrated in FIG. 7 is the same as a signal flow in an electronic device, which sets voice call service as a hold state, illustrated in FIG. 6. Therefore, a detailed description on the signal flow (operations 741 to 755) has been omitted.

When a media manager 724 (for example, the media manager 420) has received an RTP packet from the network 730 during a reference expiration session received from an IMS service manager 722 (operation 757), the media manager 724 may transmit RTP event occurrence information to the IMS service manager 722 (for example, the IMS service manager 410) (operation 759).

The IMS service manager 722 may transmit local hold tone reproducing stop information to an application 710 (for example, the applications 370) in response to the RTP event occurrence information (operation 761).

The application 710 may reproduce a call hold tone by using a sound source (a network hold tone) received from the network 730 through the media manager 724 in response to a local hold tone reproducing limit information. The application 710 (for example, the dialer 372) may reproduce a sound source, which is included in an RTP packet continuously received from the network 730, as a call hold tone.

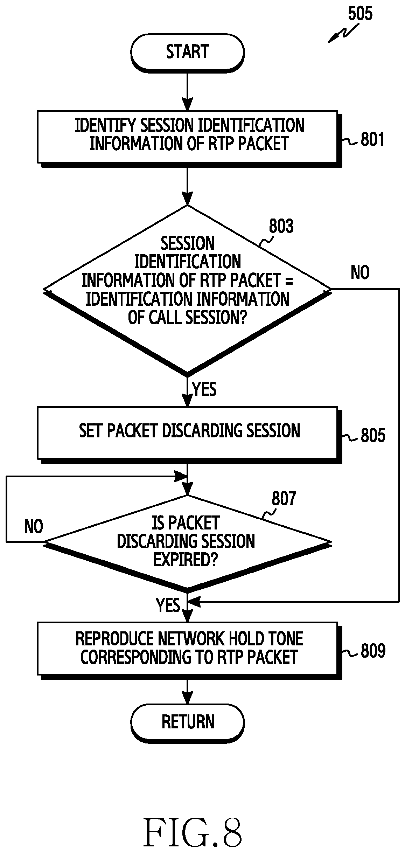

FIG 8 is a flowchart for the selective reproduction of a network hold tone by an electronic device according to various embodiments of the present disclosure. Hereinafter, a description will be made on an operation for reproducing a call hold tone corresponding to an RTP packet in operation 505 of FIG. 5.

Referring to FIG. 8, in operation 801, an electronic device (for example, the electronic device 101) may identify session identification information (e.g., SSRC) of an RTP packet which is received from a network after a call hold is set.

In operation 803, the electronic device may determine whether the session identification information of the RTP packet is identical to identification information of a call cession. For example, when a call hold tone is received from a network, the electronic device may newly generate a media stream with a media server (a call hold tone providing server) through SIP signaling. Therefore, the electronic device may receive, for the call hold tone, an RTP packet including session identification information which is different from identification information (SSRC) of a call session.

In operation 805, when session identification information of an RTP packet is identical to identification information of a call cession, the electronic device may set a packet discarding session. For example, when session identification information of an RTP packet is the same as identification information of a call session, the processor 120 may recognize the corresponding packet as a delayed RTP packet (call delay packet) among RTP packets for a call service. When a call is held, the processor 120 may set a packet discarding session so that a call voice is not reproduced.

In operation 807, the electronic device may determine whether the packet discarding session expires.

In operation 809, when session identification information of an RTP packet is different from identification information of a call session or the packet discarding session expires, the electronic device may reproduce a network hold tone included in an RTP packet received from a network. For example, the processor 120 may control the input/output interface 150 to reproduce the network hold tone included in the RTP packet received from the network.

According to various embodiments of the present disclosure, when an RTP packet has not been received from a network during a reference expiration session in a packet discarding session, the electronic device may reproduce a pre-stored network hold tone (operation 507). Here, the reference expiration session may be set with reference to a time point at which a previous RTP packet has been received.

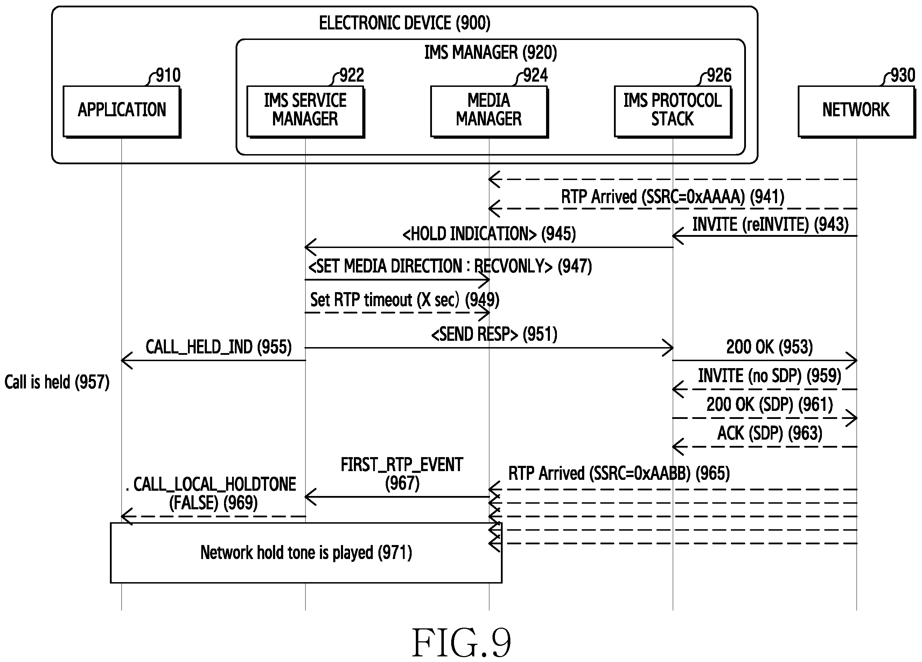

FIG 9 is a signal flow diagram illustrating the selective reproduction of a network hold tone by an electronic device on the basis of session identification information of an RTP packet according to various embodiments of the present disclosure.

Referring to FIG. 9, an electronic device 900 (for example, the electronic device 101) may provide a voice call service to a counterpart electronic device (for example, the electronic device 104) through an IMS-based PS network. For example, the electronic device 900 may reproduce a call voice of a counterpart electronic device, which is received from the media manager 924 (for example, the media manager 420), through an application 910 (for example, the dialer 372) (operation 941).

An IMS protocol stack 926 (for example, the IMS protocol stack 430) may receive a call hold request signal (SIP invite (reinvite)) from a network 930 while a voice call service is being provided (operation 943).

The IMS protocol stack 926 may transmit call hold indication information to an IMS service manager 922 (for example, the IMS service manager 410) in response to reception of the call hold request signal (operation 945).

The IMS service manager 922 may transmit reception mode setting information (media direction: recvonly) to the media manager 924 in response to reception of the call hold indication information (operation 947).

The IMS service manager 922 may set a reference expiration session for determining whether an RTP packet is received in response to the reception mode setting of the electronic device. The IMS service manager 922 may transmit reference expiration session information (RTP timeout) to the media manager 924 (operation 949).

After setting the reception mode of the electronic device, the IMS service manager 922 may transmit call hold setting information (send resp) to the IMS protocol stack 926 (operation 951).

The IMS protocol stack 926 may transmit call hold setting completion information (200 OK) to the counterpart electronic device through the network 930 in response to reception of the call hold setting information (operation 953).

The IMS service manager 922 may transmit call hold indication information (call held ind) to an application 910 (for example, the applications 370) in response to the reception mode setting of the electronic device (operation 955).

The application 910 may switch a voice call service with the counterpart electronic device into a call hold state (for example, reception mode) on the basis of the call hold indication information received from the IMS service manager 922 (operation 957).

The electronic device 900 may newly generate a media stream of the network 930 for receiving a call hold tone (a network hold tone) from the network 930 (operations 959 to 963). For example, when receiving the call hold setting completion information (200 OK) from the electronic device 900 (for example, the IMS protocol stack 926), the network 930 may transmit a session generation request signal (SIP invite (no SDP)) to the electronic device 900 in order to transmit the call hold tone (operation 959). The IMS protocol stack 926 of the electronic device 900 may transmit the session setting completion signal (200 OK) (SDP) to the network 930 in response to the session generation request signal (operation 961). The network 930 may transmit a identification signal (ACK (SDP)) of the session setting completion signal to the electronic device 900 and newly generate a media stream for transmitting the call hold tone (operation 963). In this case, the network 930 may change session identification information of an RTP packet.

The media manager 924 may determine whether an RTP packet is received from the network 930 during a reference expiration session received from the IMS service manager 922. When an RTP packet has been received from the network 930 (operation 965), the media manager 924 may compare session identification information (for example, SSRC=0xAABB) of the RTP packet and identification information of a call session (for example, SSRC=0xAAAA) to determine whether both pieces of information are the same as each other.

When the session identification information of the RTP packet is different from the identification information of the call session, the media manager 924 may transmit RTP event generation information to the IMS service manager 922 (operation 967).

The IMS service manager 922 may transmit local hold tone reproducing stop information to the application 910 (for example, the application 372) in response to reception of the RTP event occurrence information (operation 969).

The application 910 may reproduce a call hold tone by using a sound source (a network hold tone) received from the network 930 through the media manager 924 in response to reception of the local hold tone reproducing stop information. The application 910 (for example, the dialer 372) may reproduce a sound source, which is included in an RTP packet continuously received from the network 930, as a call hold tone.

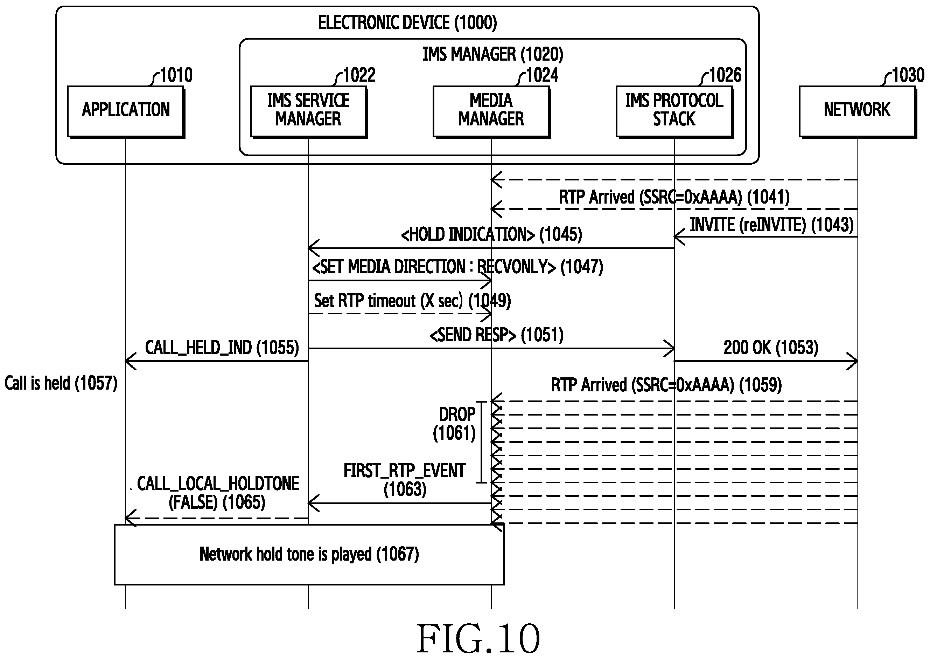

FIG 10 is a signal flow diagram illustrating the selective reproduction of a network hold tone by an electronic device on the basis of session identification information of an RTP packet according to various embodiments of the present disclosure.

Referring to FIG. 10, an electronic device 1000 (for example, the electronic device 101) may set a voice call service with a counterpart electronic device as a hold state (for example, reception mode) on the basis of a call hold request signal received from a network 1030 (operations 1041 to 1057). Here, a signal flow (operations 1041 to 1057) in an electronic device, which sets a call hold, as illustrated in FIG. 10 is the same as a signal flow in an electronic device, which sets a call hold, illustrated in FIG. 9. Therefore, a detailed description on the signal flow (operation 1041 to 1057) has been omitted.

A media manager 1024 may determine whether an RTP packet is received from the network 1030 during a reference expiration session which is received from an IMS service manager 1022. When an RTP packet has been received from the network 1030 (operation 1059), the media manager 1024 may compare session identification information (for example, SSRC=0xAAAA) of the RTP packet and identification information of a call session (for example, SSRC=0xAAAA) to determine whether both pieces of information are the same as each other.

When the session identification information of the RTP packet is the same as the identification information of the call session, the media manager 1024 may set a packet discarding session so that a call voice is not reproduced during a call hold (operation 1061). The media manager 1024 may discard an RTP packet received from the network 1030 during the packet discarding session.

When an RTP packet is received from the network 1030 after the packet discarding session, the media manager 1024 may transmit RTP event generation information to the IMS service manager 1022 (operation 1063).

The IMS service manager 1022 may transmit local hold tone reproducing stop information to an application 1010 (for example, the dialer 372) in response to reception of the RTP event occurrence information (operation 1065).

The application 1010 may reproduce a call hold tone by using a sound source (a network hold tone) received from the network 1030 through the media manager 1024 in response to reception of the local hold tone reproducing stop information (operation 1067).

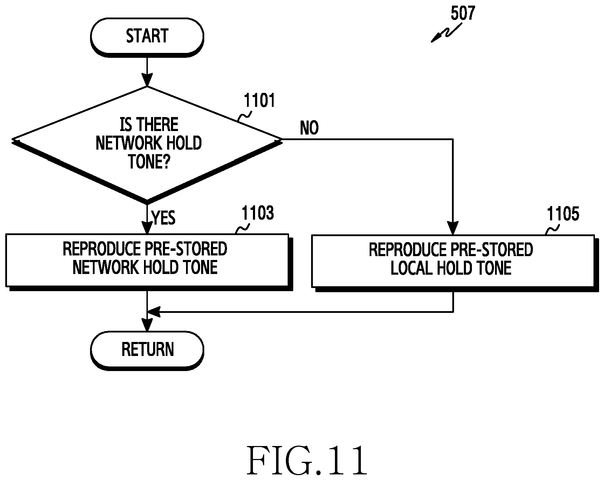

FIG 11 is a flowchart illustrating the selective reproduction of a local hold tone by an electronic device according to various embodiments of the present disclosure. Hereinafter, a description will be made on an operation for reproducing a pre-stored call hold tone in operation 507 of FIG. 5.

Referring to FIG. 11, in operation 1101, when an RTP packet is not received during a reference session, the electronic device (for example, the electronic device 101) may determine whether there is a network hold tone pre-stored in a memory (for example, the memory 130).

In operation 1103, when there is a pre-stored network hold tone, the electronic device may reproduce the network hold tone as a call hold tone. For example, when a network corresponding to a pre-stored network hold tone is the same as a network providing a voice call service, the processor 120 may reproduce the pre-stored network hold tone as the call hold tone.

In operation 1105, when there is a pre-stored network hold tone, the electronic device may reproduce a local hold tone, which is pre-stored in the memory, as a call hold tone.

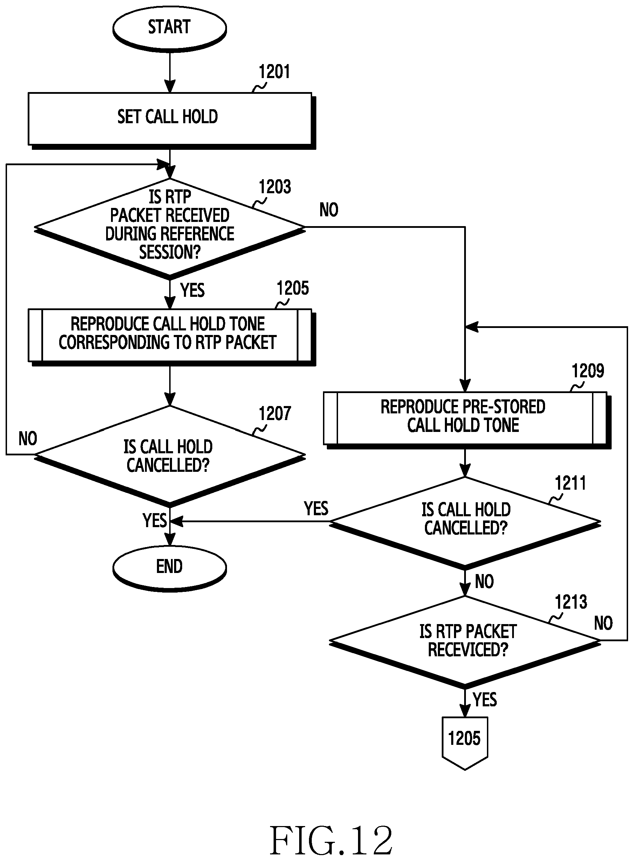

FIG 12 is a flowchart illustrating the change of a call hold tone by an electronic device according to various embodiments of the present disclosure.

Referring to FIG. 12, in operation 1201, the electronic device (for example, the electronic device 101) may set a call hold while a voice call service with a counterpart electronic device is being provided through a PS network. For example, the processor 120 may set the call mode of the electronic device as a reception mode in response to a call hold request signal received from the counterpart electronic device (for example, the external electronic device 104).

In operation 1203, after the call hold is set, the electronic device may determine whether an RTP packet is received during a reference session.

In operation 1205, when an RTP packet is received from a network during the reference session, the electronic device may reproduce a call hold tone corresponding to the RTP packet. For example, when an RTP packet, which includes identification information different from identification information of a call session, is received during the reference session, the processor 120 may reproduce a sound source, which is included in the RTP packet, as a call hold tone.

In operation 1207, the electronic device may determine whether the call hold is cancelled. For example, the processor 120 may determine whether a call hold cancellation signal is received through the communication interface 170 (for example, the IMS protocol stack 430 or an SIP protocol stack).

When the call hold is not cancelled, in operation 1203, the electronic device may determine again whether an RTP packet is received during a reference session.

In operation 1209, when an RTP packet is not received from a network during the reference session, the electronic device may reproduce a pre-stored call hold tone. For example, the processor 120 may reproduce a local hold tone or a network hold tone, stored in the memory 130.

In operation 1211, the electronic device may determine whether the call hold is cancelled.

In operation 1213, when the call hold is not cancelled, the electronic device may determine whether an RTP packet is received.

When an RTP packet is received, the electronic device may change, to a call hold tone, a network hold tone which corresponds to the RTP packet received from the network.

When an RTP packet is not received, in operation 1209, the electronic device may continuously reproduce a pre-stored call hold tone.

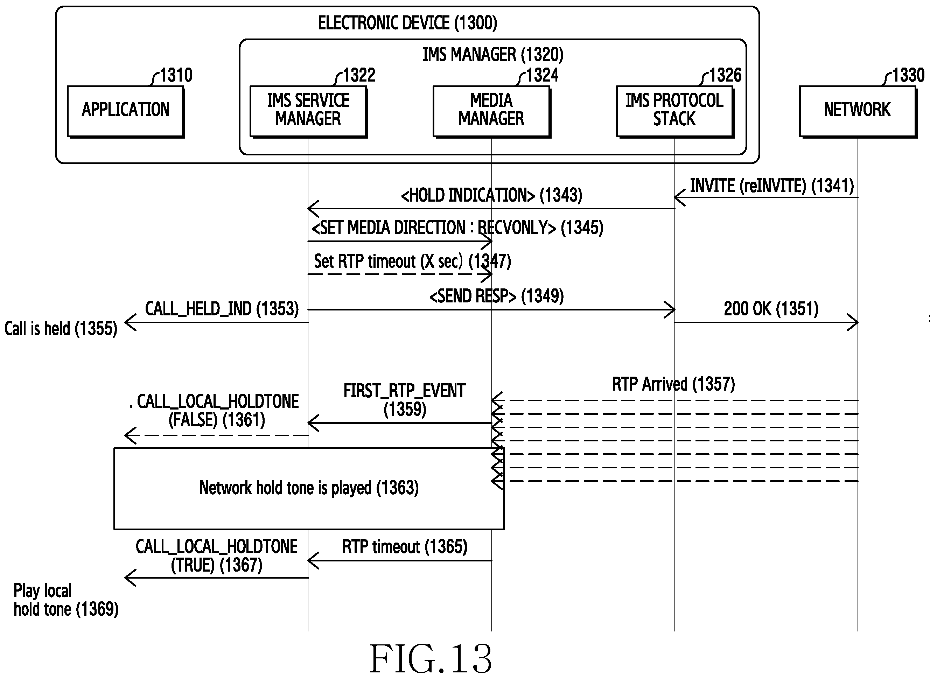

FIG 13 is a signal flow diagram illustrating the change of a call hold tone by an electronic device according to various embodiments of the present disclosure.

Referring to FIG. 13, an electronic device 1300 (for example, the electronic device 101) may set a call service with a counterpart electronic device as a hold state (for example, reception mode) on the basis of a call hold request signal received from a network 1330 (operations 1341 to 1355). Here, a signal flow (operations 1341 to 1355) in an electronic device, which sets a call hold, as illustrated in FIG. 13 is the same as a signal flow in an electronic device, which sets a voice call service as a hold state, illustrated in FIG. 6. Therefore, a detailed description on the signal flow (operation 1341 to 1355) has been omitted.

When an RTP packet is received from the network 1330 during a reference expiration session (operation 1357), a media manager 1324 (for example, the media manager 420) may transmit RTP event occurrence information to an IMS service manager 1322 (for example, the IMS service manager 410) (operation 1359).

The IMS service manager 1322 may transmit local hold tone reproducing stop information to an application 1310 (for example, the dialer 372) in response to reception of the RTP event occurrence information (operation 1361).

The application 1310 may continuously reproduce a call hold tone by using a sound source (a network hold tone) received from the network 1330 through the media manager 1324 in response to reception of the local hold tone reproducing stop information (operation 1363).

When an RTP packet is not received during a reference expiration session while a call hold tone is being reproduced by using a sound soured received from the network 1330, the media manager 1324 may transmit RTP timeout information (RPT timeout) to the IMS service manager 1322 (operation 1365).

The IMS service manager 1322 may transmit local hold tone reproducing indication information to the application 1310 in response to the RTP timeout information (operation 1367).

In response to reception of the local hold tone reproducing indication information, the application 1310 may change a call hold tone to a local hold tone to reproduce the local hold tone (operation 1369).

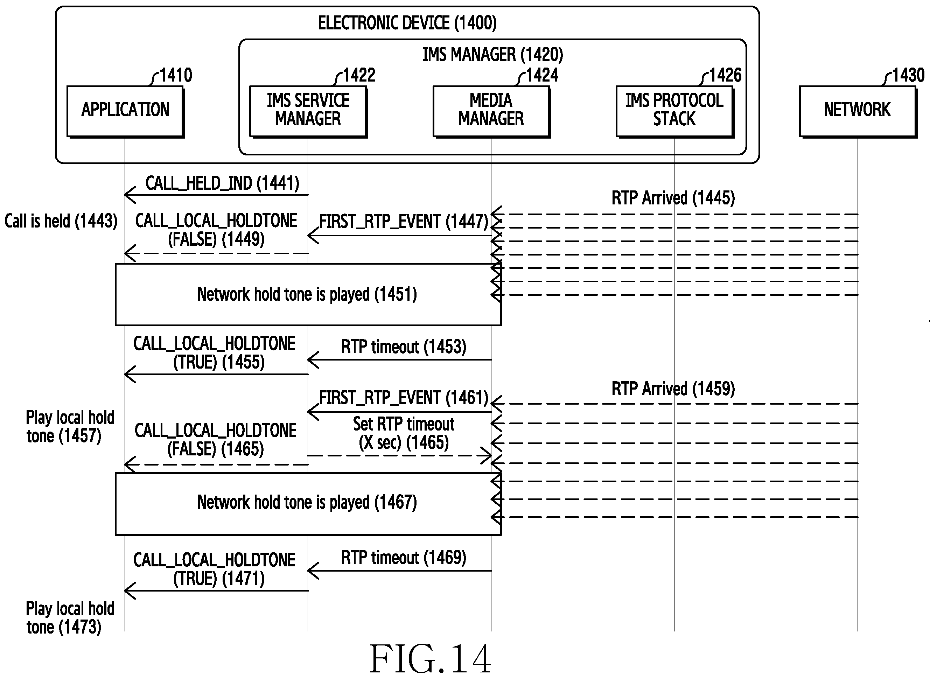

FIG 14 is a signal flow diagram illustrating the change of a call hold tone by an electronic device according to various embodiments of the present disclosure.

Referring to FIG. 14, when an RTP packet is received from a network 1430 during a reference expiration session with reference to a call hold setting time point, an electronic device 1400 (for example, the electronic device 101) may reproduce a call hold tone by using a sound source received from the network 1430 (operations 1441 to 1451). Here, a signal flow (operations 1441 to 1451) in an electronic device, which reproduces a network hold tone, as illustrated in FIG. 14 is the same as a signal flow (operations 1341 to 1363) in an electronic device, which reproduces a network hold tone, as illustrated in FIG. 13. Therefore, a detailed description on the signal flow (operation 1441 to 1451) has been omitted.

When an RTP packet is not received during the reference expiration session while a network hold tone is being reproduced, the electronic device 1400 may change a call hold tone to a local hold tone and reproduce the local hold tone (operations 1453 to 1457). Here, a signal flow (operations 1453 to 1457) in an electronic device, which changes a call hold tone to a local hold tone, as illustrated in FIG. 14 is the same as a signal flow (operations 1365 to 1369) in an electronic device, which changes a call hold tone to a local hold tone, as illustrated in FIG. 13. Therefore, a detailed description on the signal flow (operation 1453 to 1457) has been omitted.

When an RTP packet is received from the network 1430 while a local hold tone is being reproduced, the electronic device 1400 may change a call hold tone to a network hold tone again. For example, a media manager 1424 (for example, the media manager 420) may determine whether an RTP packet is received while an application 1410 (for example, the applications 370) is reproducing a local hold tone. When an RTP packet is received from the network 1430 (operation 1459), the media manager 1424 may transmit RTP event occurrence information to an IMS service manager 1422 (for example, the IMS service manager 410) (operation 1461).

The IMS service manager 1422 may transmit, to the media manager 1424, reference expiration session information (RTP timeout) for determining whether an RTP packet is received, in response to reception of the RTP event occurrence information (operation 1463).

The IMS service manager 1422 may transmit local hold tone reproducing stop information to the application 1410 (for example, the dialer 372) in response to reception of the RTP event occurrence information (operation 1465).

The application 1410 may change a call hold tone to a sound source (a network hold tone) received from the network 1430 through the media manager 1424, in response to reception of the local hold tone reproducing stop information (operation 1467).

The electronic device 1400 may change a call hold tone to a local hold tone again on the basis of whether an RTP packet is received while a network hold tone is being reproduced. For example, when an RTP packet is not received during a reference expiration session while a network hold tone is being reproduced, the media manager 1424 may transmit RTP timeout information (RPT timeout) to the IMS service manager 1422 (operation 1469).

The IMS service manager 1422 may transmit local hold tone reproducing indication information to the application 1410 in response to the RTP timeout information (operation 1471).

In response to reception of the local hold tone reproducing indication information, the application 1410 may change a call hold tone to a local hold tone (operation 1473).

According to various embodiments of the present disclosure, an operating method of a electronic device may include: performing a voice call with a counterpart electronic device through a packet network; setting a call hold in response to a request made by the counterpart electronic device; determining whether an RTP packet is received during a reference session; and selectively reproducing a call hold tone in response to whether the RTP packet is received during the reference session.

According to an embodiment, when an RTP packet is not received during the reference session, the selectively reproducing of the call hold tone may include reproducing a call hold tone pre-stored in the electronic device.

According to various embodiments, when an RTP packet is received while the pre-stored call hold tone is being reproduced, the changing the pre-stored call hold tone into a call hold tone corresponding to the RTP packet may further be included.

According to an embodiment, when an RTP packet is received during the reference session, the selectively reproducing of the call hold tone may include reproducing a call hold tone corresponding to the RTP packet.

According to various embodiments, the reproducing of the call hold tone corresponding to the RTP packet may include comparing session identification information of the RTP packet and identification information of a call session and, when the session identification information is different from the identification information of the call session, reproducing a call hold tone corresponding to the RTP packet.

According to an embodiment, when the session identification information of the RTP packet is the same as the identification information of the call session, setting a packet discarding session and reproducing a call hold tone corresponding to an RTP packet received after the packet discarding session may further be included.

According to various embodiments, the session identification information may include a Synchronization Source Identifier (SSRC).

According to various embodiments, storing a call hold tone corresponding to the RTP packet may further be included.

According to various embodiments, when an RTP packet is not received during the reference session while a call hold tone corresponding to the RTP packet is being reproduced, changing into the stored call hold tone corresponding to the RTP packet may further be included.

According to various embodiments, when an RTP packet is not received during the reference session while a call hold tone corresponding to the RTP packet is being reproduced, changing into a call hold tone pre-stored in the electronic device may further be included.

According to various embodiments of the present disclosure, when a local hold tone is reproduced as a call hold tone, the electronic device may continuously reproduce the local hold tone regardless of whether an RTP packet is received.

An electronic device and an operating method thereof according to various embodiments, in the case of a call hold, may selectively reproduce a call hold tone on the basis of whether an RTP packet is received, thereby reproducing a call hold tone corresponding to a service policy of a network service provider without renewing software and reproducing a call hold tone even when a fault occurs in a network.

An electronic device and an operating method thereof according to various embodiments, in the case of a call hold, may selectively reproduce a network hold tone on the basis of session identification information of an RTP packet, thereby preventing an error from occurring in reproducing a call hold tone due to the delay of an RTP packet for a call service

The term "module" as used herein may, for example, mean a unit including one of hardware, software, and firmware or a combination of two or more of them. The "module" may be interchangeably used with, for example, the term "unit", "logic", "logical block", "component", or "circuit". The "module" may be a minimum unit of an integrated component element or a part thereof. The "module" may be a minimum unit for performing one or more functions or a part thereof. The "module" may be mechanically or electronically implemented. For example, the "module" according to the present disclosure may include at least one of an Application-Specific Integrated Circuit (ASIC) chip, a Field-Programmable Gate Arrays (FPGA), and a programmable-logic device for performing operations which has been known or are to be developed hereinafter

According to various embodiments, at least some of the devices (for example, modules or functions thereof) or the method (for example, operations) according to the present disclosure may be implemented by a command stored in a computer-readable storage medium in a program module form. The instruction, when executed by a processor (e.g., the processor 120), may cause the one or more processors to execute the function corresponding to the instruction. The computer-readable storage medium may be, for example, the memory 130.

The computer readable recoding medium may include a hard disk, a floppy disk, magnetic media (for example, a magnetic tape), optical media (for example, a Compact Disc Read Only Memory (CD-ROM) and a Digital Versatile Disc (DVD)), magneto-optical media (for example, a floptical disk), a hardware device (for example, a Read Only Memory (ROM), a Random Access Memory (RAM), a flash memory), and the like. In addition, the program instructions may include high class language codes, which can be executed in a computer by using an interpreter, as well as machine codes made by a compiler. Any of the hardware devices as described above may be configured to work as one or more software modules in order to perform the operations according to various embodiments of the present disclosure, and vice versa.

Any of the modules or programming modules according to various embodiments of the present disclosure may include at least one of the above described elements, exclude some of the elements, or further include other additional elements. The operations performed by the modules, programming module, or other elements according to various embodiments of the present disclosure may be executed in a sequential, parallel, repetitive, or heuristic manner. Further, some operations may be executed according to another order or may be omitted, or other operations may be added.

The embodiments disclosed herein are provided merely to easily describe technical details of the present disclosure and to help the understanding of the present disclosure, and are not intended to limit the scope of various embodiments of the present disclosure.

## Claims

1. An electronic device (101) comprising:
a communication interface (170) configured to transmit/receive data for a voice call with a counterpart electronic device (104) through a packet network (162);
a processor (120) electrically connected to the communication interface (170); and
a memory (130) electrically connected to the processor (120),
wherein the memory (130) stores instructions that, when executed, cause the processor (120) to:
establish a call session for the voice call with the counterpart electronic device (104),
if a signal for requesting a call hold is received from the counterpart electronic device (104), set (501) a call mode of the electronic device (101) to reception mode,
determine (503) whether a Real-time Transport Protocol, RTP, packet is received during a reference time,
if a RTP packet is received during the reference time, determine (803) whether a synchronization source identifier, SSRC, of the RTP packet is identical to an SSRC of the call session,
if the SSRC of the RTP packet is identical to the SSRC of the call session, discard the RTP packet and reproduce (505, 809) a call hold tone included in RTP packets received after a predetermined time, and
if the SSRC of the RTP packet is different from the SSRC of the call session, reproduce (809) the call hold tone included in the RTP packet.

2. The electronic device of claim 1, wherein, if the RTP packet is not received during the reference time, the instructions cause the processor (120) to reproduce (507) a call hold tone stored in the electronic device.

3. The electronic device of claim 2, wherein, if the RTP packet is received while the stored call hold tone is being reproduced, the instructions cause the processor (120) to determine whether a synchronization source identifier, SSRC, of the RTP packet is identical to an SSRC of the call session and change the stored call hold tone to a call hold tone included in the RTP packet if the SSRC of the RTP packet is different from the SSRC of the call session.

4. The electronic device of claim 1, wherein the instructions cause the processor (120) to store, in the memory (130), the call hold tone included in the RTP packet received after the predetermined time.

5. The electronic device of claim 4, wherein, if an RTP packet is not received during the reference time while the call hold tone is being reproduced, the instructions cause the processor (120) to change the call hold tone to a call hold tone stored in the memory (130).

6. An operating method of an electronic device (101), comprising:
establishing a call session for a voice call with a counterpart electronic device (104) through a packet network (162);
if a signal for requesting a call hold is received from the counterpart electronic device (104), setting (501) a call mode of the electronic device (101) to reception mode;
determining (503) whether a Real-time Transport Protocol, RTP, packet is received during a reference time;
if a RTP packet is received during the reference time, determining (803) whether a synchronization source identifier, SSRC, of the RTP packet is identical to an SSRC of the call session;
if the SSRC of the RTP packet is identical to the SSRC of the call session, discarding the RTP packet and reproducing (505, 809) a call hold tone included in RTP packets received after a predetermined time; and
if the SSRC of the RTP packet is different from the SSRC of the call session, reproducing (809) the call hold tone included in the RTP packet.

7. The method of claim 6, further comprising discarding (805) an RTP packet received during the predetermined time.

8. The method of claim 6, further comprising,
storing the call hold tone included in the RTP packet received after the predetermined time.

9. The method of claim 6, further comprising,
if the RTP packet is not received during the reference time while the call hold tone is being reproduced, changing the call hold tone to a call hold tone stored in the electronic device (101).

10. The method of claim 6, further comprising,
if the RTP packet is not received during the reference time, reproducing (507) a call hold tone stored in the electronic device (101).

## Patentansprüche

1. Elektronische Vorrichtung (101), umfassend:
eine Kommunikationsschnittstelle (170), die so gestaltet ist, dass sie über ein paketvermittelndes Netzwerk (162) Daten für einen Sprachanruf mit einer elektronischen Vorrichtung (104) als Gegenstelle übermittelt/empfängt;
einen Prozessor (120), der mit der Kommunikationsschnittstelle (170) elektrisch verbunden ist; und
einen Speicher (130), der mit dem Prozessor (120) elektrisch verbunden ist;
wobei der Speicher (130) Anweisungen speichert, die, wenn sie ausgeführt werden, bewirken, dass der Prozessor (120) folgendes durchführt:
Aufbauen einer Anrufsitzung für den Sprachanruf mit der elektronischen Vorrichtung (104) als Gegenstelle;
Einstellen (501) eines Anrufmodus der elektronischen Vorrichtung (101) auf Empfangsmodus, wenn ein Signal für die Anforderung des Haltens einer Verbindung von der elektronischen Vorrichtung (104) als Gegenstelle empfangen wird;
Bestimmen (503), ob ein Real-Time Transport Protocol (RTP)-Paket während einer Bezugszeit empfangen wird;
Bestimmen (803), ob ein Synchronization Source Identifier, SSRC, des RTP-Pakets einem SSRC der Anrufsitzung entspricht, wenn ein RTP-Paket während der Bezugszeit empfangen wird;
wenn der SSRC des RTP-Pakets mit dem SSRC der Anrufsitzung identisch ist, Verwerfen des RTP-Pakets und Reproduzieren (505, 809) eines in nach einem vorbestimmten Zeitraum empfangenen RTP-Paketen enthaltenen Tons für das Halten einer Verbindung; und
wenn sich der SSRC des RTP-Pakets von dem SSRC der Anrufsitzung unterscheidet, Reproduzieren (809) des in dem RTP-Paket enthaltenen Tons für das Halten einer Verbindung.

2. Elektronische Vorrichtung nach Anspruch 1, wobei, wenn das RTP-Paket nicht während der Bezugszeit empfangen wird, die Anweisungen bewirken, dass der Prozessor (120) einen in der elektronischen Vorrichtung gespeicherten Ton für das Halten einer Verbindung reproduziert (507).

3. Elektronische Vorrichtung nach Anspruch 2, wobei, wenn das RTP-Paket empfangen wird, während der gespeicherte Ton für das Halten einer Verbindung reproduziert wird, die Anweisungen bewirken, dass der Prozessor (120) bestimmt, ob ein Synchronization Source Identifier, SSRC, des RTP-Pakets identisch ist mit einem SSRC der Anrufsitzung, und den gespeicherten Ton für das Halten einer Verbindung in einen Ton für das Halten einer Verbindung ändert, der in dem RTP-Paket enthalten ist, wenn sich der SSRC des RTP-Pakets von dem SSRC der Anrufsitzung unterscheidet.

4. Elektronische Vorrichtung nach Anspruch 1, wobei die Anweisungen bewirken, dass der Prozessor (120) in dem Speicher (130) den Ton für das Halten einer Verbindung speichert, der in dem nach dem vorbestimmten Zeitraum empfangenen RTP-Paket enthalten ist.

5. Elektronische Vorrichtung nach Anspruch 4, wobei, wenn ein RTP-Paket nicht während der Bezugszeit empfangen wird, während der Ton für das Halten einer Verbindung reproduziert wird, die Anweisungen bewirken, dass der Prozessor (120) den Ton für das Halten einer Verbindung in einen in dem Speicher (130) gespeicherten Ton für das Halten einer Verbindung ändert.

6. Betriebsverfahren einer elektronischen Vorrichtung (101), umfassend:
Aufbauen eine Anrufsitzung für einen Sprachanruf über ein paketvermittelndes Netzwerk (162) mit einer elektronischen Vorrichtung (104) als Gegenstelle;
Einstellen (501) eines Anrufmodus der elektronischen Vorrichtung (101) auf Empfangsmodus, wenn ein Signal für die Anforderung des Haltens einer Verbindung von der elektronischen Vorrichtung (104) als Gegenstelle empfangen wird;
Bestimmen (503), ob ein Real-Time Transport Protocol (RTP)-Paket während einer Bezugszeit empfangen wird;
Bestimmen (803), ob ein Synchronization Source Identifier, SSRC, des RTP-Pakets einem SSRC der Anrufsitzung entspricht, wenn ein RTP-Paket während der Bezugszeit empfangen wird;
wenn der SSRC des RTP-Pakets mit dem SSRC der Anrufsitzung identisch ist, Verwerfen des RTP-Pakets und Reproduzieren (505, 809) eines in nach einem vorbestimmten Zeitraum empfangenen RTP-Paketen enthaltenen Tons für das Halten einer Verbindung; und
wenn sich der SSRC des RTP-Pakets von dem SSRC der Anrufsitzung unterscheidet, Reproduzieren (809) des in dem RTP-Paket enthaltenen Tons für das Halten einer Verbindung.

7. Verfahren nach Anspruch 6, ferner umfassend das Verwerfen (805) eines während dem vorbestimmten Zeitraum empfangenen RTP-Pakets.

8. Verfahren nach Anspruch 6, ferner umfassend
das Speichern des in dem nach dem vorbestimmten Zeitraum empfangenen RTP-Paket enthaltenen Tons für das Halten einer Verbindung.

9. Verfahren nach Anspruch 6, ferner umfassend
Ändern des Tons für das Halten einer Verbindung in einen in der elektronischen Vorrichtung (101) gespeicherten Ton für das Halten einer Verbindung, wenn das RTP-Paket nicht während der Bezugszeit empfangen wird, während der Ton für das Halten einer Verbindung reproduziert wird.

10. Verfahren nach Anspruch 6, ferner umfassend
Reproduzieren (507) eines in der elektronischen Vorrichtung (101) gespeicherten Tons für das Halten einer Verbindung, wenn das RTP-Paket nicht während der Bezugszeit empfangen wird.

## Revendications

1. Dispositif électronique (101) comprenant :
une interface de communication (170) conçue pour transmettre/recevoir des données pour un appel vocal avec un dispositif électronique homologue (104) par l'intermédiaire d'un réseau par paquets (162) ;
un processeur (120) en connexion électrique avec l'interface de communication (170) ; et
une mémoire (130) électriquement connectée au processeur (120),
la mémoire (130) stockant des instructions qui, lorsqu'elles sont exécutées, amènent le processeur (120) à :
établir une session d'appel pour l'appel vocal avec le dispositif électronique homologue (104),
si un signal pour demander une mise en attente d'appel est reçu du dispositif électronique homologue (104), mettre (501) un mode d'appel du dispositif électronique (101) en mode réception,
déterminer (503) si un paquet RTP (Real-time Transport Protocol) est reçu pendant un temps de référence,
si un paquet RTP est reçu pendant le temps de référence, déterminer (803) si un identifiant de source de synchronisation, SSRC, du paquet RTP est identique à un SSRC de la session d'appel,
si le SSRC du paquet RTP est identique au SSRC de la session d'appel, rejeter le paquet RTP et reproduire (505, 809) une musique d'attente d'appel incluse dans les paquets RTP reçus après un temps prédéfini, et
si le SSRC du paquet RTP est différent du SSRC de la session d'appel, reproduire (809) la musique d'attente d'appel incluse dans le paquet RTP.

2. Dispositif électronique selon la revendication 1, si le paquet RTP n'est pas reçu pendant le temps de référence, les instructions amenant le processeur (120) à reproduire (507) une musique d'attente d'appel stockée dans le dispositif électronique.

3. Dispositif électronique selon la revendication 2, si le paquet RTP est reçu alors que la musique d'attente d'appel stockée est reproduite, les instructions amenant le processeur (120) à déterminer si un identifiant de source de synchronisation, SSRC, du paquet RTP, est identique à un SSRC de la session d'appel et à modifier la musique d'attente d'appel stockée en une musique d'attente d'appel comprise dans le paquet RTP si le SSRC du paquet RTP est différent du SSRC de la session d'appel.

4. Dispositif électronique selon la revendication 1, les instructions amenant le processeur (120) à stocker, dans la mémoire (130), la musique d'attente d'appel incluse dans le paquet RTP reçu après le temps prédéfini.

5. Dispositif électronique selon la revendication 4, si un paquet RTP n'est pas reçu pendant le temps de référence pendant la reproduction de la musique d'attente d'appel, les instructions amenant le processeur (120) à changer la musique d'attente d'appel en une musique d'attente d'appel enregistrée dans la mémoire (130).

6. Procédé de fonctionnement d'un dispositif électronique (101) comprenant les étapes :
établissement d'une session d'appel pour un appel vocal avec un dispositif électronique homologue (104) par l'intermédiaire d'un réseau par paquets (162) ;
si un signal pour demander une mise en attente d'appel est reçu du dispositif électronique homologue (104), mise (501) d'un mode d'appel du dispositif électronique (101) en mode réception,
détermination (503) du fait de savoir si un paquet RTP (Real-time Transport Protocol) est reçu pendant un temps de référence,
si un paquet RTP est reçu pendant le temps de référence, détermination (803) du fait de savoir si un identifiant de source de synchronisation, SSRC, du paquet RTP est identique à un SSRC de la session d'appel,
si le SSRC du paquet RTP est identique au SSRC de la session d'appel, rejet du paquet RTP et reproduction (505, 809) d'une musique d'attente d'appel incluse dans des paquets RTP reçus après un temps prédéfini ; et
si le SSRC du paquet RTP est différent du SSRC de la session d'appel, reproduction (809) de la musique d'attente d'appel incluse dans le paquet RTP.

7. Procédé selon la revendication 6, comprenant en outre l'étape élimination (805) d'un paquet RTP reçu pendant le temps prédéfini.

8. Procédé selon la revendication 6, comprenant en outre l'étape
stockage de la musique d'attente d'appel incluse dans le paquet RTP reçu après le temps prédéfini.

9. Procédé selon la revendication 6, comprenant en outre l'étape
si le paquet RTP n'est pas reçu pendant le temps de référence pendant la reproduction de la musique d'attente d'appel, changement de la musique d'attente d'appel en une musique d'attente d'appel enregistrée dans l'appareil électronique (101).

10. Procédé selon la revendication 6, comprenant en outre l'étape
si le paquet RTP n'est pas reçu pendant le temps de référence, reproduction (507) d'une tonalité d'appel en attente stockée dans le dispositif électronique (101).
